(19) Europäisches Patentamt
European Patent Office
Office européen des brevets

(11) Publication number: **0 187 436**
**B1**

(12) # EUROPEAN PATENT SPECIFICATION

(45) Date of publication of patent specification: **04.04.90**

(51) Int. Cl.$^5$: **C 07 F 15/00,** C 07 C 235/26

(21) Application number: **85305045.8**

(22) Date of filing: **15.07.85**

(54) **Rhodium catalyst and its application.**

(30) Priority: **28.12.84 PT 79774**

(43) Date of publication of application:
**16.07.86 Bulletin 86/29**

(45) Publication of the grant of the patent:
**04.04.90 Bulletin 90/14**

(84) Designated Contracting States:
**AT BE CH DE FR LI**

(56) References cited:
**EP-A-0 086 046**

**INORGANICA CHIMICA ACTA, vol. 6, no. 4, December 1972, pages 660-662; L. TONIOLO: "The facile hydrogenation of the aryldiazonium functional group to hydrazine, amine, and ammonia derivatives"**
**Houben-Weyl, Methoden der Organischen Chemie, Band I/2, Seiten 337, 338, Georg Thieme Verlag, Stuttgart 1959**

**The file contains technical information submitted after the application was filed and not included in this specification**

(73) Proprietor: **HOVIONE INTER LTD.**
**P.O. Box 1500**
**CH-8305 Dietlikon Zurich (CH)**

(72) Inventor: **Villax, Ivan**
**Travessa do Ferreiro 8**
**P-1200 Lisbon (PT)**
Inventor: **Page, Philip Ronald**
**Rua dos Girassois Lote 38A Bairro de Santo Antonio**
**Sao Domingos de Rana P-2775 Parede (PT)**

(74) Representative: **Wain, Christopher Paul et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 187 436 B1

**Description**

The present invention refers to a compound, bis(triphenylphosphine)hydrazinomethoxyrhodium (I), which is a homogeneous hydrogenation rhodium catalyst, particularly useful in the hydrogenation of the exocyclic methylene group of 6-demethyl-6-deoxy-6-methylene-tetraclines to prepare α-6-deoxy-tetracyclines.

The so-called "Wilkinson catalyst", i.e. tris(triphenylphosphine)chlororhodium (I) complex is a homogeneous rhodium hydrogenation catalyst and was first described by T. F. Young, J. A. Osborne, F. H. Jardine and G. Wilkinson in Chem. Comm., p. 131 (1965), whilst bis(triphenylphosphine)chlororhodium (I) was described by M. A. Bennett and P. A. Longstaff, Chem. & Ind., p. 846 (1965).

U.S. Patent 3,463,830 (filed in 1966) describes the preparation of zero valent platinum and palladium catalysts, by the reduction of these metals from oxidation state II by the use of the reducing agent, hydrazine. The function of the hydrazine is merely as a reducing agent, and it is not incorporated into the catalyst so prepared. As will be described hereinbelow, the compound of the present invention differs from those of U.S. Patent 3,463,830 in that the hydrazine is incorporated into the rhodium complex as a ligand, and surprisingly the rhodium is not reduced to the zero oxidation state.

U.S. Patent 3,956, 177 (filed in 1971) describes compositions useful as hydroformylation catalysts, prepared by contacting an organorhodium halide with a hydrazine and a phosphorus-containing adjuvant, to form an intimate mixture thereof. It is stated in the specification that these catalysts are not compounds formed by the components of the mixture, and they are not described as useful for the hydrogenation of carbon/carbon double bonds, but as catalysts for hydroformylation reactions.

U.S. Patent 4,001,321 (filed in 1974) describes the preparation of a homogeneous hydrogenation catalyst, i.e. dicarboxylato(triphenylphosphine)rhodium (II) or dicarboxylato(substituted triphenylphosphine)rhodium (II) for the stereo-selective hydrogenation of methacycline.

U.S. Patent 3,962,131 (filed in 1975) describes a homogeneous hydrogenation catalyst, which is obtained by refluxing rhodium trichloride and sodium acetate in methanol, and then reacting the resulting reaction mixture with triphenylphosphine. This catalyst, the formula of which is unknown, but distinct from those of U.S. Patent 4,001,321, is effective in the hydrogenation of the exocyclic methylene group of methacycline, yielding α-6-deoxyoxytetracycline.

European Patent Application 86046 describes a homogeneous rhodium catalyst, containing, besides a tertiary phosphine, a hydrazine as ligand. The incorporation of a hydrazine as a ligand into the complex has the unexpected result of improving the regio-specificity and stereo-specificity of the catalyst for the hydrogenation of exocyclic methylene groups, such as for instance in the hydrogenation of methacycline to α-6-deoxy-oxytetracycline. By such improvements a significant reduction of the amount of the catalyst employed in relation to the substrate is possible, as well as allowing the reduction of the pressure and of the reaction time.

This application however did not provide specific formulae for the catalysts therein prepared, which could cause some difficulty in the decision as to the quantity of catalyst to be used, without the accomplishment of a series of experimental trials. Further, it has been verified that some of the processes as such did not allow the production of catalysts in a completely pure form, i.e. the catalysts were contaminated by oxygen absorbed during their preparation, thus it was not possible to establish their exact structural formulae. The present invention effectively overcomes this problem, by the use of a complex with a uniform and well-defined composition.

According to the present invention there is provided a compound, bis(triphenylphosphine)hydrazinomethoxyrhodium (I), and its use in an improved process for the stereospecific hydrogenation of acid addition salts of 6-demethyl-6-deoxy-6-methylene-5-hydroxytetracycline, in the presence of a catalyst, in order to prepare α-6-deoxy-5-hydroxytetracycline in high yield and purity, characterised by the fact that the catalyst is bis(triphenylphosphine)hydrazinomethoxyrhodium (I), the reaction being carried out optionally in the presence of triphenylphosphine, at a pressure of 98 to 981 kPa and a temperature from 20°C to 95°C, in the presence of a solvent inert in the reaction, such as a lower alcohol containing from 1 to 6 carbon atoms:

We have now found that the problems associated with the processes of European Patent Application 86046, can be reduced or overcome by the use of degassed solvents, performing the reaction in the presence of an inert atmosphere, such as nitrogen, and drying in an inert atmosphere.

In this manner, the compound of the present invention, bis(triphenylphosphine)hydrazinomethoxyrhodium (I), substantially un-contaminated by oxygen, is obtained. Another advantage of the compound of the present invention is that it more easily permits the determination of the effective minimum amount of rhodium that can be used per unit of the substrate to be hydrogenated. Taking into consideration the high price of rhodium, it has been found necessary to employ the effective minimum amount of the catalyst.

The catalyst of the present invention offers advantages not only in the field of tetracyclines, but also in other fields where stereospecific homogeneous catalysis is required.

The catalyst of the present invention is prepared by reacting tris(triphenylphosphine)chlororhodium (I) with hydrazine hydrate, which is normally present in an excess based upon the number of moles of rhodium present. It is preferred that 3 moles of the hydrazine are used for each mole of rhodium. It is also

possible that the tris(triphenylphosphine)chlororhodium (I) is substituted by the in situ reaction product of rhodium trichloride and triphenylphosphine.

The reaction medium is degassed methanol, and the reaction is carried out at the reflux temperature of the reaction medium. The reaction is carried out under an inert atmosphere, preferably nitrogen, and can be followed visually in that the initial color of the reaction mixture is purple and that of the catalyst of the present invention is orange/yellow.

When the reaction is judged complete, the catalyst is obtained by conventional means, followed by drying under an inert atmosphere.

Naturally, any amount of rhodium eventually remaining in the mother liquors of the above preparation can easily be recovered, practically without loss, by conventional methods and recycled.

Thus, the product of the present invention, as obtained in Example 1 was shown, by a combination of mass spectrometry, infra-red spectroscopy and nuclear magnetic resonance to have the following structure:—

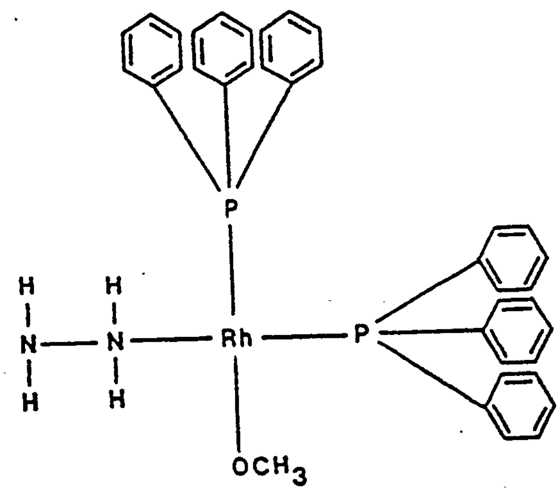

The present invention also concerns the preparation of α-6-deoxy-5-hydroxytetracycline (doxycycline) by hydrogenating acid addition salts of 6-demethyl-6-deoxy-6-methylene-5-hydroxytetracycline in a reaction inert solvent, in the presence of the compound of the present invention, bis(triphenylphosphine)-hydrazinomethoxyrhodium (I) as catalyst.

The hydrogenation can be carried out in a traditionally designed stainless steel hydrogenator. The reaction temperature is between 20°C and 95°C, preferably between 60°C and 90°C. The reaction is too slow at temperatures below 20°C and decomposition of both starting material and product starts to occur above 95°C. The pressure of hydrogen used in the reaction is preferably between 98 and 981 kPa.

The reaction time is dependant on the amount of catalyst used, the type of hydrogenator, the reaction temperature and the hydrogen pressure. A satisfactory reaction time is from about 3 to 10 hours, but satisfactory results and high yields can be obtained even after 16 hours of hydrogenation.

6-Demethyl-6-deoxy-6-methylene-5-hydroxytetracycline can be prepared by any of the known processes, for example according to U.S. Patent 3,849,491, but should not contain impurities which may act as catalyst inhibitors.

The starting material is added in the form of an acid addition salt, such as hydrochloride or p-toluenesulphonate, but other acid addition salts can be used provided that the acid is not a catalyst inhibitor.

The hydrogenation is stopped when the rate of consumption of hydrogen drops drastically. The reaction mixture, once the hydrogenation is completed, contains nearly exclusively the α-epimer, does not contain unreacted starting material or only traces, the amount of by-products or degradation products is negligible and the β-epimer is less than 1%, and usually it is around 0.1%.

It has been observed that the addition of a small amount of a tertiary phosphine, preferably triphenylphosphine, to the reaction mixture, prior to starting the hydrogenation, will accelerate the rate of hydrogen consumption, facilitate completion of the reaction and increase the yield up to 100%. The preferred excess of the tertiary phosphine in relation to the catalyst is about 10 moles/mole, although it can be increased to above 50 moles/mole without detriment to the yield or purity of the product. The optimum amount of additional tertiary phosphine can easily be determined for the catalyst by running a few experiments.

The purity of the reaction mixture thus obtained is such that the doxycycline can be crystallised directly from said reaction mixture by adding p-toluenesulphonic acid in excess, on condition that the solvent in the reaction medium is a non-solvent for the doxycycline p-toluenesulphonate salt thus formed; such a solvent is preferably methanol.

The purity so obtained is usually superior to 99% calculated on the dry basis. The doxycycline p-toluenesulphonate can subsequently be transformed directly into the hydrochloride hemiethanolate hemihydrate by conventional processes with a yield near to stoichiometric.

The following examples are given by way of illustration of the present invention, without in any way limiting the scope thereof.

Example 1

Catalyst: Tris(triphenylphosphine)chlororhodium (I) (0.48 g; 0.52 mmoles) was refluxed under nitrogen for 90 minutes with hydrazine hydrate (76 µl; 1.56 mmoles) in dry, degassed methanol (20 ml). The yellow orange solution was cooled to yield a yellow solid.

The infra-red spectrum of this yellow solid showed the presence of triphenylphosphine, contained a band around 3300 $cm^{-1}$ due to stretching of the N — H bonds and a band at 420—430 $cm^{-1}$ due to the presence of the metal bonded methoxy group. There was no band in the 250—400 $cm^{-1}$ region that could be assigned to a rhodium-chlorine bond (as compared with the band at 320 $cm^{-1}$ for the Wilkinson catalyst). Additionally, the absence of chlorine in the compound was confirmed by a negative spot test. The nuclear magnetic resonance spectrum showed one sharp peak at β3.4, assigned to the protons of the methoxy group and a complex region at δ7—7.5 due to the protons of the phenyl groups. The mass spectrum did not show a molecular ion, the highest peak being for $Rh(PPh_3)_2$. These results show the structural identity of the compound to be bis(triphenylphosphine)hydrazinomethoxyrhodium (I).

Hydrogenation: 25 mg (36.20 µmoles) of the thus obtained catalyst in methanol (20 ml) was added to a stainless steel hydrogenation apparatus under magnetic stirring, containing 6-demethyl-6-deoxy-6-methylene-5-hydroxytetracycline hydrochloride (7.38 g; 15.41 mmoles) and triphenylphosphine (0.1 g; 0.38 mmoles) in methanol (40 ml). After purging it with nitrogen, hydrogen was added to a pressure of 785 kPa and the reaction mixture was heated up to 89°C. After 5 h 30 m the consumption dropped, and 1 hour later the reaction mixture was cooled down. It was filtered through a G4 glass-filter, then p-toluenesulphonic acid (3.3 g; 17.35 mmoles) was added to the filtrate which was then stirred. The α-6-deoxy-oxytetracycline p-toluenesulphonate thus formed was filtered, washed with acetone and dried. The product weighed 8.90 g, and had a purity of 99.5%. No β-isomer or starting material were detectable by circular paper chromatography ("Schleicher & Schüll" paper N° 2045 B, 265 mm, ref. N° 381804; stationary phase: 100 ml of a solution of 0.1M citric acid and 40 ml of 0.2M anhydrous disodium phosphate were mixed to make a buffer with pH 3.5; mobile phase: nitromethane:chloroform:pyridine — 20:10:3).

**Claims**

1. The compound bis(triphenylphosphine)hydrazinomethoxyrhodium (I) of the formula:

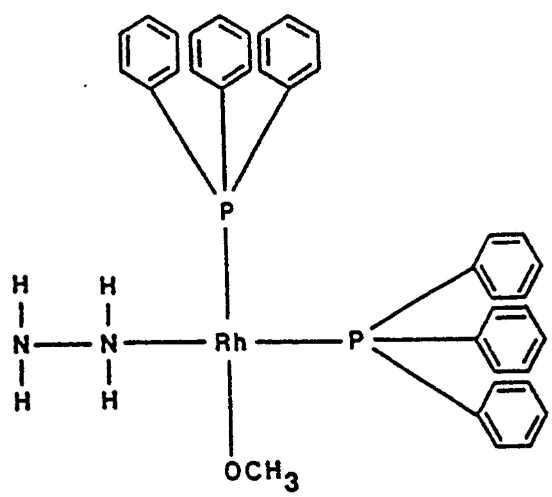

2. An improved process for the stereospecific hydrogenation of acid addition salts of 6-demethyl-6-deoxy-6-methylene-5-hydroxytetracycline, in the presence of a catalyst, in order to prepare α-6-deoxy-5-hydroxytetracycline in high yield and purity, wherein the process is effected at a pressure of 98 to 981 kPa and a temperature from 20°C to 95°C, in the presence of a solvent inert in the reaction, optionally in the presence of triphenylphosphine, characterised in that the catalyst is the compound of claim 1.

3. A process according to claim 2, wherein the solvent inert in the reaction is a lower alcohol containing from 1 to 6 carbon atoms.

**Patentansprüche**

1. Die Verbindung Bis(triphenylphosphin)hydrazinomethoxyrhodium(I) der Formel

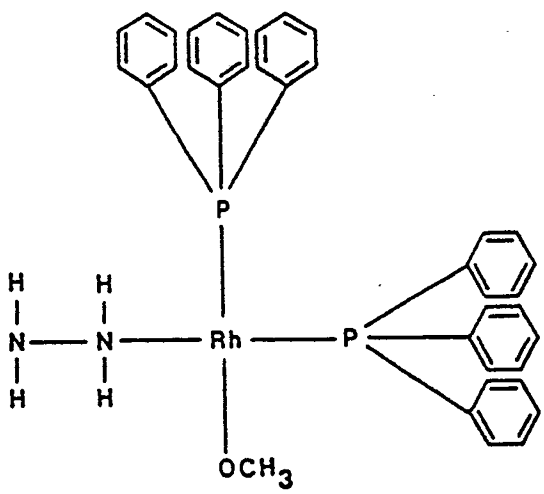

2. Verbessertes Verfahren zur stereospezifischen Hydrierung von Säureadditionssalzen des 6-Desmethyl-6-desoxy-6-methylen-5-hydroxytetracyclins in Gegenwart eines Katalysators zur Herstellung von α-6-Desoxy-5-hydroxytetracyclin in hoher Ausbeute und Reinheit, wobei das Verfahren bei einem Druck von 98 bis 981 kPA und einer Temperatur von 20°C bis 95°C in Gegenwart eines in der Reaktion inerten Lösungsmittels, gegebenenfalls in Gegenwart von Triphenylphosphin, durchgeführt wird, dadurch gekennzeichnet, daß der Katalysator die Verbindung nach Anspruch 1 ist.

3. Verfahren nach Anspruch 2, worin das in der Reaktion inerte Lösungsmittel ein niederer Alkohol mit 1 bis 6 Kohlenstoff-Atomen ist.

**Revendications**

1. Le composé bis(triphénylphosphine)hydrazinométhoxyrhodium (I) de la formule:

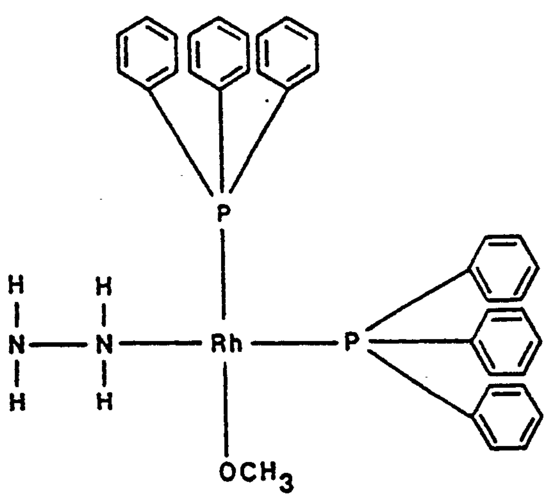

2. Procédé amélioré pour l'hydrogénation stéréo-spécifique des sels d'acides d'addition de la 6-déméthyl-6-désoxy-6-méthylène-5-hydroxytétracycline, en présence d'un catalyseur, de façon à préparer l'α-6-désoxy-5-hydroxytétracycline tout en fournissant des rendements et puretés élevés où le procédé est réalisé à une pression entre 98 et 981 kPa et à une température entre 20°C et 95°C, en présence d'un solvant inerte dans la réaction, facultativement en présence de triphénylphosphine, caracterisé en ce que le catalyseur est le composé de la revendication 1.

3. Procédé suivant la revendication 2, caractérisé en ce que le solvant inerte dans la réaction est un alcool inférieur contenant entre 1 et 6 atomes de carbone.